# EUROPEAN PATENT APPLICATION

(11) **EP 4 645 716 A1**
(43) Date of publication of application: **05.11.2025**
(21) Application number: 25173695.5
(22) Date of filing: 30.04.2025
(51) Int. Cl.: H04B 7/185, H04L 27/00

(54) **METHODS FOR SYNCHRONIZATION IN A NON-TERRESTRIAL NETWORK**

(30) Priority: 30.04.2024 US 202463640513 P; 14.08.2024 US 202463682889 P
(71) Applicant: Gilat Satellite Networks, Ltd., 49130 Petah-Tikva (IL)
(72) Inventor: GAMLIEL, Oron, 49130 Petak Tikva (IL); LEVITAS, Guy, 49130 Petak Tikva (IL); GAL, Mati, 49130 Petak Tikva (IL)
(74) Representative: V.O.

(57) **Abstract**

Methods are described for synchronization in a non-terrestrial network. A satellite communication terminal may receive, over its satellite link, synchronization transmissions containing one or more synchronization signals. The synchronization transmission may be received with an unknown frequency offset and/or at very low signal-to-noise ratio, and/or the synchronization signals may be formatted in any of several predefined patterns, making detection and/or demodulation of the one or more synchronization signals a challenge. According to the methods described herein, detection of at least one synchronization signal may include about simultaneous correlation in 3 dimensions of multiple instances of the at least one synchronization signal. The correlation result may then be used for generating a fine-resolution frequency correction, once applied demodulation of one or more additional synchronization signals and extraction of network access information becomes possible.

## Description

### CROSS-REFERENCE TO RELATED APPLICATIONS

This application claims the benefit of U.S. Provisional App. No. 63/640,513, titled "Method for Synchronization in a Non-Terrestrial Network", and filed on April 30, 2024, and also claims the benefit of U.S. Provisional App. No. 63/682,889, titled "Method for Synchronization in a Non-Terrestrial network", and filed on August 14, 2024. Each of the above-referenced applications are hereby incorporated by reference in their entirety.

### FIELD OF ART / TECHNICAL FIELD

Aspects of the disclosure pertain to the field of satellite communication. Additional aspects of the disclosure pertain to the 3^{rd} Generation Partnership Project (3GPP) definitions regarding 5^{th} generation (5G) Non-Terrestrial Networks (NTN).

### BACKGROUND

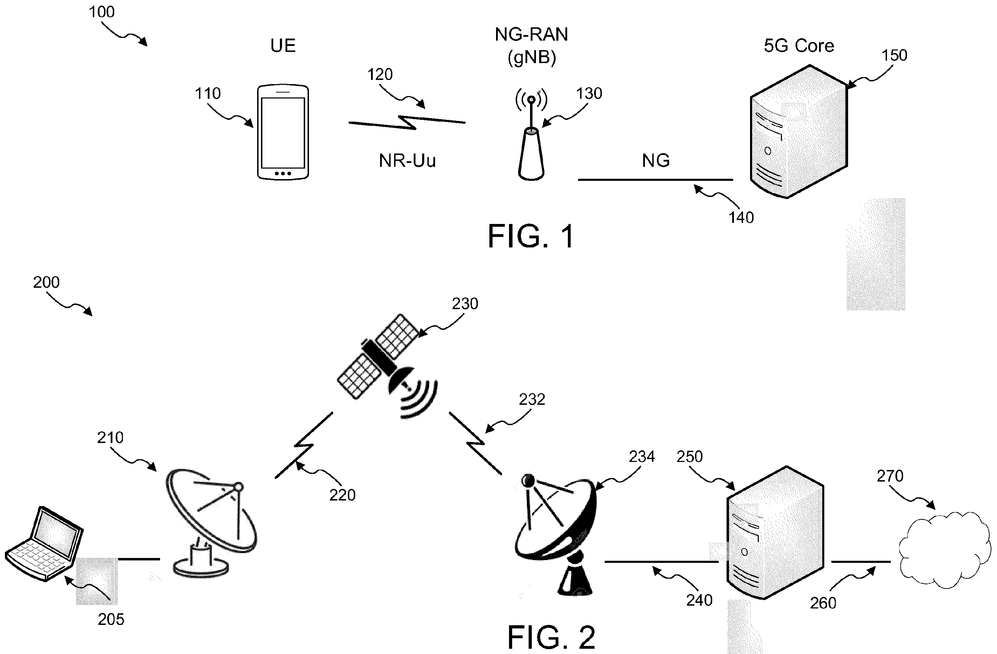

The 3GPP organization defines standards for cellular communication. In particular, 3GPP issues standards regarding the 5^{th} generation of cellular networks (5G). FIG. 1 shows an illustration of a 5G network 100, comprising wireless device 110 (UE), new-generation radio access network 130 (NG-RAN) the transmitter part of which may be referred to as gNB (5G Node B), and a 5G core 150 (e.g., a new generation core (NGC)). The new generation interface 140 (NG) is the interface between the NG-RAN 130 and the 5G core 150 (). The new-radio Uu interface 120 (NR-Uu) is the air interface between the UE 110 and the NG-RAN 130. At its physical layer, the NR-Uu interface is based on Orthogonal Frequency Division Multiplexing (OFDM), a method for transmitting data using multiple orthogonal sub-carrier (SC) signals.

Most 5G networks are terrestrial networks (TN), so radio equipment providing cell coverage (e.g., a gNB) is stationary. Yet, 3GPP also issues standards for non-terrestrial networks (NTN), where the gNB is located on an airborne platform or a satellite orbiting the Earth.

One aspect standardized by 3GPP is the way a user's wireless device (e.g., a mobile device, UE, etc.) may gain access into the 5G network. In particular, 3GPP standardizes a Cell Search Procedure, which the wireless device UE may follow and/or execute in order to find an access point to the network. The Cell Search Procedure comprises the following steps (the procedure may include additional steps not listed herein):
a. Tuning to a predefined frequency, where a transmission containing a Synchronization Signaling Block (SSB) may be present
b. Detecting a Primary Synchronization Signal (PSS) and a Secondary Synchronization Signal (SSS) included in the SSB
c. Decoding, after successfully detecting the PSS and the SSS, the Physical Broadcast Channel (PBCH or BCH) included in the SSB
d. Extracting, after successfully decoding the PBCH, a Master Information Block (MIB) that contains parameters required for accessing the network (e.g., authentication information, a security key, etc.)

In TN, detecting the various signals may not be too complicated, for example, because link conditions are almost always favorable. The largest distance between a wireless device (e.g., UE) and a relevant gNB is rated at 5Km, so the signals the wireless device (e.g., UE) is attempting to detect and/or decode may often be received with a positive signal to noise ratio (SNR). Furthermore, any frequency shift caused by the Doppler Effect may be negligible (e.g., less than 1kHz at 5GHz while the wireless device (e.g., UE) is in motion at about 200KPH relative to the gNB). Conversely, in NTN, where the gNB may be placed on a satellite, the link conditions may no longer be so favorable, even if the satellite is in a Low Earth Orbit (LEO) (e.g., to minimize latency). Due to the much larger distance (e.g., more than 1000Km) and the use of frequency bands licensed to satellite communication (e.g., Ku-band or Ka-band), which are known to be susceptible to rain fades, the signals the wireless device (e.g., UE) is attempting to detect could be received at negative, very low SNR (VLSNR) levels. In addition, due to high-speed motion of the satellite (e.g., about 25,000KPH) and the use of higher frequency bands (e.g., Ku-band or Ka-Band), the signals that the wireless device (e.g., UE) may be attempting to detect and decode may be received with frequency shifts that could reach and even exceed 300kHz. In addition, detection may become even more challenging if the satellite employs a Beam Hopping technique.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some aspects of the disclosure in a simplified form as a prelude to the description below.

Methods described herein may be directed to a user terminal (UT) of a satellite communication network, the method may comprise receiving (at the UT) a synchronization transmission containing a first synchronization signal and a second synchronization signal, and detecting the first synchronization signal, wherein the first synchronization signal may be formatted in accordance with any one of several predefined patterns of a first set of patterns, and wherein the synchronization transmission may be received at an unknown time offset from a start of a frame and/or with an unknown frequency offset.

The method may further comprise determining, in association with the detected first synchronization signal, a detection quality indicator, a first part of a network identifier in accordance with the first set of patterns, a frequency offset estimation, and a time offset estimation.

The method may further comprise determining, based on the first part of the network identifier and the frequency offset estimation, a fine frequency offset estimation, and calculating a frequency correction value based on the frequency offset estimation and the fine frequency offset estimation.

The method may further comprise applying the frequency correction to the received synchronization transmission to produce a frequency corrected synchronization transmission, demodulating the frequency corrected synchronization transmission in accordance with an applicable modulation technique to produce one or more demodulated signals, and extracting the second synchronization signal from the one or more demodulated signals.

The method may further comprise correlating the second synchronization signal with a plurality of predefined patterns associated with a second set of patterns, and determining based on said correlating, a second part of the network identifier in accordance with the second set of patterns.

A synchronization transmission may contain one or more about identical instances of a third synchronization signal, and the method may further comprise combining the one or more instances of the third synchronization signal to produce a combined third synchronization signal, decoding the combined third synchronization signal to produce a decoded third synchronization signal, and extracting from the decoded third synchronization signal at least an information block and an error detection word or an error correction word associated with the third synchronization signal.

A user terminal (UT) of a satellite communication network may be configured to receive OFDM transmission from a satellite of the satellite communication network, for example, in accordance with the 5G NR-Uu interface definitions. The UT may be configured to receive a synchronization transmission in one or more transmission bursts, the synchronization transmission may contain multiple SSB instances, wherein each SSB may contain a PSS and an SSS, wherein the intervals between consecutive SSB instances may be predefined (hence known), and wherein the synchronization transmission (e.g., as a whole) may be received at an unknown time offset from a start of a frame and/or with an unknown frequency offset. The UT may be further configured to detect the PSS by performing a 3-dimensional correlation over (a part of) the frame duration, using a plurality of frequency offset hypotheses and all the expected PSS formats. The UT may be configured to determine, based on the 3-dimensional correlation, a maximum correlation value, and then determine, based on the maximum correlation value, any of a second part of a network identifier (N_{ID}(2)), a frequency offset estimation corresponding to a frequency offset hypothesis corresponding to the correlation peak value, and a time offset estimation corresponding to the correlation peak value.

A UT may be further configured to determine, based on the second part of the network identifier (N_{ID}(2)) and the frequency offset estimation, a fine frequency offset estimation that may be relative to the frequency offset estimation, and to calculate a frequency correction value based on the frequency offset estimation and the fine frequency offset estimation, for example, by summing the frequency offset estimation and the fine frequency offset estimation.

A UT may be further configured to apply the frequency correction to the received synchronization transmission to produce a frequency corrected synchronization transmission, demodulate the frequency corrected synchronization transmission in accordance with an OFDM modulation to produce multiple blocks of symbols corresponding to the multiple SSB instances, and to extract from the multiple blocks of symbols the symbols corresponding to the multiple instances of the SSS.

A UT may be further configured to combine the corresponding symbols of the multiple instances of the SSS to produce symbols corresponding to a combined SSS. The UT may be configured to correlate, in the frequency domain, symbols corresponding to the combined SSS with a plurality of predefined SSS patterns (e.g., all 336 of them) to produce a plurality of correlation peaks, determine a maximal correlation peak, and determine the first part of the network identifier (N_{ID}(1)) in accordance with the SSS pattern corresponding to the maximal correlation peak.

A synchronization transmission may contain multiple identical instances of a PBCH signal, and a UT may be further configured to combine the multiple PBCH signal instances to produce a combined PBCH signal, decode the combined PBCH signal to produce a decoded PBCH signal, and extract from the decoded PBCH signal at least a Master Information Block (MIB) and/or a Cyclic Redundancy Check (CRC) word.

### BRIEF DESCRIPTION OF THE DRAWINGS

Having thus described the disclosure in general terms, reference will now be made to the accompanying drawings, which are not necessarily drawn to scale, and wherein:
FIG. 1 shows an example of a 5G terrestrial network (TN) (prior art).
FIG. 2 shows an example of a non-terrestrial network (NTN) communication system.
FIG. 3 shows an example of a waveform.
FIG. 4 shows a flow chart in accordance with aspects of the disclosure.
FIG. 5 shows a flow chart in accordance with aspects of the disclosure.
FIG. 6 shows a block diagram in accordance with aspects of the disclosure.
FIG. 7 shows a block diagram in accordance with aspects of the disclosure.
FIG. 8 shows a block diagram in accordance with aspects of the disclosure.

### DETAILED DESCRIPTION

FIG. 2 shows an example of a communication system 200. Communication system 200 may be configured to provide connectivity between one or more (e.g., geographically dispersed) customer premises equipment (CPE) devices 205 and a data network 270. The data network 270 may be associated with a private network. The data network 270 may be associated with the Internet. Connectivity between CPE devices 205 and data network 270 may comprise Ethernet connectivity (e.g., in accordance with Metro Ethernet Forum (MEF) recommendations), and/or Internet Protocol (IP) connectivity.

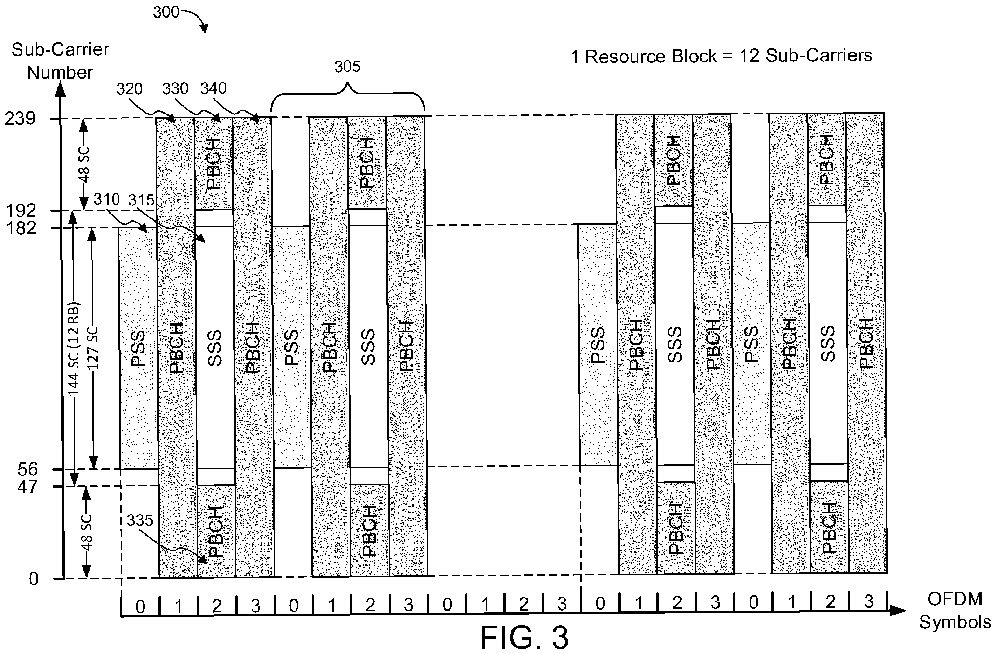

Communication system 200 may be configured to provide connectivity between one or more CPE devices 205 and the data network 270 over one or more satellites. Communication system 200 may comprise at least one geostationary satellite (e.g., satellite 230 in FIG. 3 may represent the at least one geostationary satellite). Communication system 200 may comprise a constellation of non-geostationary satellites, for example, a constellation of Mean Earth Orbit (MEO) or Low Earth Orbit (LEO) satellites (e.g., satellite 230 in FIG. 3 may represent any satellite associated with a constellation of satellites, or any subset of the constellation of satellites including the entire constellation). To provide connectivity over a satellite (or a satellite constellation) 230, the communication system 200 may comprise one or more user terminals (UT) 210, wherein each CPE devices 205 may be coupled to a UT 210, and wherein each UT 210 may be configured to communicate 220 with and/or via the satellite (or satellite constellation) 230. For example, UT 210 may be configured to transmit to a satellite 230 and to receive from a satellite 230 transmissions in the Ku-band or in the Ka-band. Furthermore, communication system 200 may comprise at least one gateway 234, wherein the at least one gateway 234 may be coupled 240 to a Point of Presence (PoP) 250 that may be connected 260 to the data network 270. The at least one gateway 234 may be configured to communicate 232 with and/or via at least one satellite (e.g., of a satellite constellation) 230 at any given time. For example, gateway 234 may be configured to transmit to a satellite 230 and to receive from a satellite 230 transmissions in the Ku-band, in the Ka-band, and/or in the Q/V-band. At any given time, a UT 210 and the at least one gateway 234 may be communicating with and/or via a same satellite 230 or with and/or via different satellites associated with the satellite constellation 230.

UT 210 may be configured to establish initial connectivity with the satellite 230 and/or with the gateway 234 by executing a procedure comprising:
a. Tuning to a predefined frequency and receiving (e.g., from or via the satellite 230) a synchronization transmission (e.g., over the communication link 220), wherein the synchronization transmission may include a first synchronization signal, a second synchronization signal, and/or a third synchronization signal;
b. detecting the first synchronization signal and/or the second synchronization signal, and extracting, from the first and/or second synchronization signals, a network identifier;
c. decoding the third synchronization signal and extracting, from the decoded third synchronization signal, an information block, wherein the information block may contain parameters required for establishing connectivity.

The synchronization transmission may reach the UT 210 over a frequency different from said predefined frequency, wherein the difference between the reception frequency and the predefined frequency may be larger than a frequency offset threshold that may be associated with a detector configured for detecting at least the first synchronization signal. The difference between the reception frequency and the predefined frequency may be, at least in part, in accordance with the Doppler shift associated with the motion of the satellite 230, for example, where satellite 230 is a LEO satellite. The synchronization transmission may reach the UT 210 at very low SNR (VLSNR) levels, for example, at SNR levels that may be lower than an SNR threshold associated with a detector configured for detecting at least the first synchronization signal.

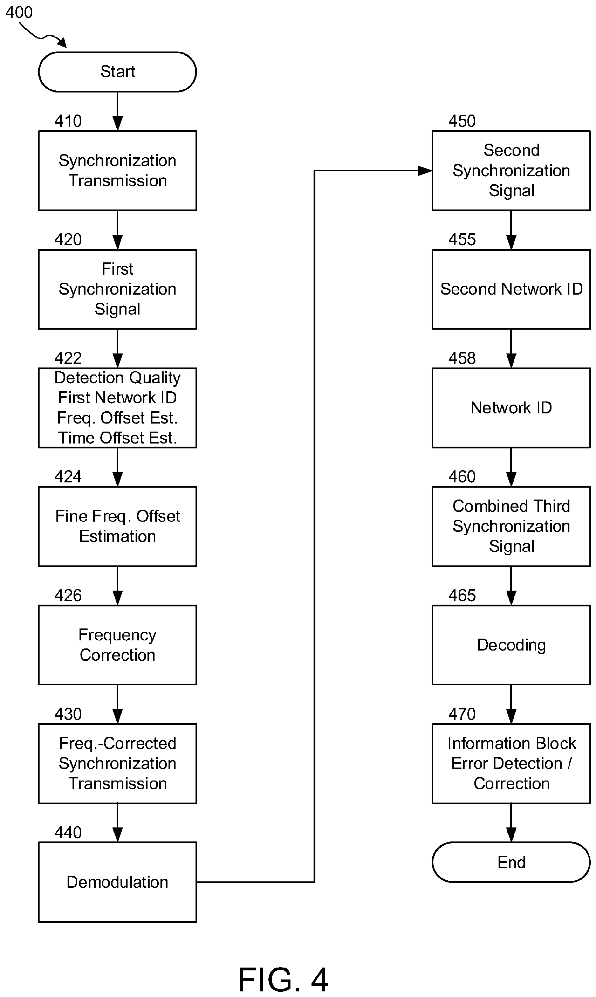

Referring to FIG. 4, a method 400 for establishing initial connectivity, while overcoming a frequency offset and VLSNR, may be presented. A UT 210 may be configured to perform method 400.

UT 210 may be configured to receive 410 a synchronization transmission, wherein the synchronization transmission may be received at an unknown time offset from a start of a frame and/or with an unknown frequency offset. The receiving of the synchronization transmission may comprise storing samples corresponding to a time interval and to a frequency range in which the synchronization transmission may be received. UT 210 may be configured to detect 420, for example, by applying one or more correlators, to at least a portion of the stored samples, a first synchronization signal included in the synchronization transmission, wherein the first synchronization signal may be formatted in accordance with one of several predefined patterns of a first set of patterns, and wherein the one or more correlators may be configured in accordance with the predefined patterns of the first set of patterns. UT 210 may be configured to determine 422 a detection quality indicator associated with the detecting 420 of the first synchronization signal, for example, according to a correlation peak associated with the one or more correlators. UT 210 may be configured to determine 422 a first part of a network identifier in accordance with a pattern of the first set of patterns, for example, based on an association of the detection quality indicator with the pattern. UT 210 may be further configured to determine 422 a frequency offset estimation and a time offset estimation corresponding to the first synchronization signal, for example, based on an association of the detection quality indicator with a frequency and a time.

Furthermore, UT 210 may be configured to determine 424, based on the first part of the network identifier and the frequency offset estimation, a fine frequency offset estimation. UT 210 may be configured to calculate, based on the frequency offset estimation and the fine frequency offset estimation, a frequency correction 426 and to apply the frequency correction to the, stored samples of the, received synchronization transmission to produce a frequency corrected synchronization transmission 430. Once the unknown frequency offset is, at least for the most part, eliminated, UT 210 may be configured to demodulate 440 the frequency corrected synchronization transmission in accordance with the modulation technique associated with the synchronization transmission, to produce one or more demodulated signals. UT 210 may be configured to extract a second synchronization signal 450 included in the synchronization transmission from the one or more demodulated signals, and to determine 455, based on the second synchronization signal, a second part of the network identifier. The determining of the second part of the network identifier may comprise correlating the second synchronization signal with a plurality of predefined patterns associated with a second set of patterns, and determining, based on said correlating, the second part of the network identifier. UT 210 may be configured to calculate 458, based on the first part of the network identifier and the second part of the network identifier, the network identifier.

The synchronization transmission may further contain one or more about identical instances of a third synchronization signal, wherein the third synchronization signal may correspond to the network identifier. UT 210 may be configured to (e.g., coherently) combine 460, based on the network identifier, the one or more instances of the third synchronization signal to produce a combined third synchronization signal, wherein the SNR of the combined third synchronization signal may be higher than the SNR of any single instance of the third synchronization signal. UT 210 may be configured to decode 465 the combined third synchronization signal to produce a decoded third synchronization signal. UT 210 may be configured to extract 470 from the decoded third synchronization signal at least an information block and an error detection word or an error correction word associated with the third synchronization signal.

Communication system 200 may be configured in accordance with recommendations of the 3^{rd} Generation Partnership Project (3GPP) concerning 5^{th} Generation Non-Terrestrial Networks (5G NTN). For example, UT 210 may be configured to communicate 220 with the satellite 230 in accordance with 5G NR-Uu interface definitions. In another example, satellite 230 may be a regenerative satellite and configured, about the same, as a 5G gNB, or as a 5G gNB Distributed Unit (gNB-DU). Furthermore, satellite 230 may be configured to communicate 232 via the gateway 234 with the 5G Core 250, for example in accordance with 5G NG interface definitions 240, or in accordance with the F1 interface, which may be the interface between a gNB-DU and a gNB Central Unit (gNB-CU). The 5G Core 250 may be connected 260 to data network 270.

FIG. 3 shows an example 5G waveform 300. Waveform 300 may correspond to a synchronization transmission that may be used as part of a cell search procedure. Satellite communication system 200 may be configured to employ waveform 300, for example, on the air interface 220 between satellite 230 (e.g., which may be configured to generate the waveform 300) and UT 210 (e.g., which may be configured to receive the waveform 300).

In the example, a synchronization transmission in accordance with waveform 300 may comprise four (4) Synchronization Signaling Block (SSB) instances (e.g., like SSB 305). Each SSB spans 240 sub-carriers and four (4) OFDM symbols. An SSB may comprise a Primary Synchronization Signal (PSS) 310, that may occupy 127 sub-carriers (e.g., sub-carriers 56 to 182) on the first OFDM symbol of the SSB, and a Secondary Synchronization Signal (SSS) 315, that may occupy the same 127 sub-carriers as PSS 310 but on the third OFDM symbol of the SSB. An SSB may comprise a Physical Broadcast Channel (PBCH) that may occupy 96 sub-carriers on the third OFDM symbol 330 and 335 and all the 240 sub-carriers on both the second 320 and fourth 340 OFDM symbols. at least the PSS may be binary-phase-shift-keying (BPSK) modulated.

As shown in FIG. 3, SSB instances may be transmitted one after the other, for example, without any other OFDM symbols between them, or with some time difference (e.g., OFDM symbols) between them. In the example shown in FIG. 3, 4 SSB instances may be transmitted, wherein the second SSB instance may immediately follow the first SSB instance, the fourth SSB instance may immediately follow the third SSB instance, and a gap of 4 OFDM symbols may exist between the third SSB instance and the second SSB instance. The arrangement shown in FIG. 3 may be only one example, and the scope of this disclosure is not limited to this particular example.

Referring to FIG. 3 and considering reception of an SSB wherein the corresponding OFDM carrier may be received at an SNR level lower than an SNR threshold that may be associated with a detector configured to detect at least a PSS included in the SSB, and at some, possibly unknown, frequency offset. Such reception conditions may pose two problems. A first problem may be related to detecting at least the PSS, as the reception level might be below the detection SNR threshold. A second problem may be related to the unknown frequency offset, wherein successfully demodulating an OFDM carrier may be possible, for example, only if a frequency offset associated with the OFDM carrier is small enough to have no consequence.

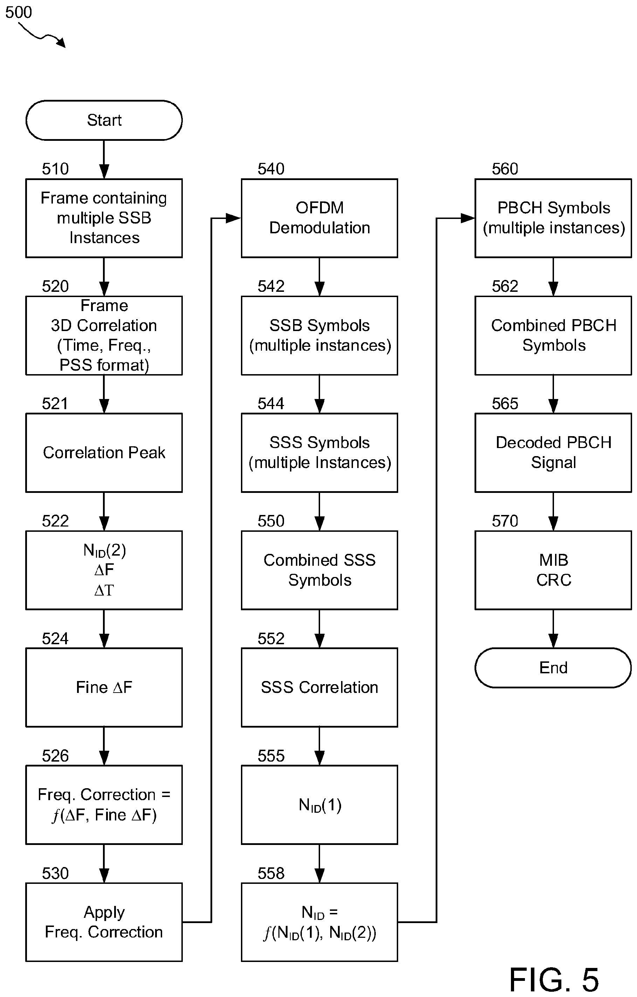

Referring to FIG. 5, a method 500 for receiving a synchronization transmission comprising multiple SSB instances, while overcoming a frequency offset and/or VLSNR, is presented. A UT 210 may be configured to perform method 500. The synchronization transmission and/or the SSB format may correspond to 3GPP recommendations concerning 5G NTN. The synchronization transmission may be formatted in accordance with the example in FIG. 3.

UT 210 may be configured to receive 510 a synchronization transmission comprising multiple SSB instances, wherein the synchronization transmission may be received at an unknown time offset from a start of a frame and/or with an unknown frequency offset. The receiving of the synchronization transmission may comprise storing samples corresponding to a time interval (e.g., a frame or part of a frame) and to a frequency range in which the synchronization transmission may be received. Said frame may correspond to half of a 5G frame (e.g., five (5) 1 millisecond subframes). UT 210 may be configured to detect 520 the multiple PSS instances included in the multiple SSB instances, for example by performing three-dimension correlation over the stored samples, wherein the three dimensions may comprise a time dimension (e.g., a duration associated with the stored samples), a frequency dimension, and a PSS format (e.g., pattern) dimension.

The UT 210 may be configured to determine 521 a correlation peak associated with the three-dimension correlation, and to determine 522, based on the correlation peak, at least a second part of a network identifier corresponding to the PSS instances (e.g., N_{ID}(2)), a frequency offset estimation corresponding to the PSS instances (e.g., ΔF), and a time offset estimation (e.g., ΔT) corresponding to the first (e.g., earliest) PSS instance of the multiple PSS instances.

Furthermore, a UT 210 may be configured to determine 524, for example, based on the second part of the network identifier (e.g., N_{ID}(2)) and/or the frequency offset estimation (e.g., ΔF), a fine frequency offset estimation (e.g., Fine ΔF). UT 210 may be configured to calculate, based on the frequency offset estimation and the fine frequency offset estimation, a frequency correction 526, and to apply 530 the frequency correction to the, stored samples of the, received synchronization transmission to produce a frequency corrected synchronization transmission. Calculating 526 the frequency correction may comprise adding the frequency offset estimation and the fine frequency offset estimation (e.g., *Freq. Correction* = *ΔF + Fine ΔF*).

Once the unknown frequency offset is, at least for the most part, eliminated, UT 210 may be configured to demodulate 540 the frequency corrected synchronization transmission, for example, to remove an OFDM modulation associated with the (e.g., frequency corrected) synchronization transmission, for example, to produce symbols associated with the multiple SSB instances 542. UT 210 may be configured to extract (e.g., from the symbols associated with the multiple SSB instances 542) symbols associated with multiple instances of SSS 544, respectively. The UT 210 may be configured to obtain at least a processing gain for the SSS, for example, by, coherently, combining symbols associated with the multiple instances of SSS into symbols associated with a single, combined SSS 550.

The UT 210 may be configured to determine a first part of the network identifier 555 (e.g., N_{ID}(1)) based on correlating 552 the combined SSS 550, at about simultaneously, with a set of predefined SSS patterns (e.g., 336 different patterns), determining a correlation peak, and determining the first part of the network identifier in accordance with the correlation peak. The UT 210 may be configured to calculate 558 the network identifier (e.g., N_{ID}) based on the first part of the network identifier 555 and the second part of the network identifier 522. According to one example, the network identifier may be calculated using the formula: *N_{ID}* = *3 * N_{ID}(1) + N_{ID}(2),* wherein N_{ID}(1) ∈ {0, 1, ..., 335} and N_{ID}(2) ∈ {0, 1, 2}.

A UT 210 may be configured to use the network identifier 558 for at least the purpose of extracting (e.g., from the symbols associated with the multiple SSB instances 542) symbols associated with multiple instances of PBCH 560, respectively. The extracting of symbols associated with multiple PBCH instances 560 may comprise at least a descrambling step, for example, in accordance with the network identifier 558. Wherein the multiple PBCH instances 560 may comprise a same sequence of symbols, the UT 210 may be configured to obtain at least a processing gain for the PBCH, for example, by, coherently, combining symbols associated with the multiple instances of PBCH into symbols associated with a single, combined PBCH 562.

A UT 210 may be configured to decode 565 the combined PBCH and extract 570 (e.g., from the decoded PBCH) at least a Master Information Block and a CRC that may be included in the PBCH.

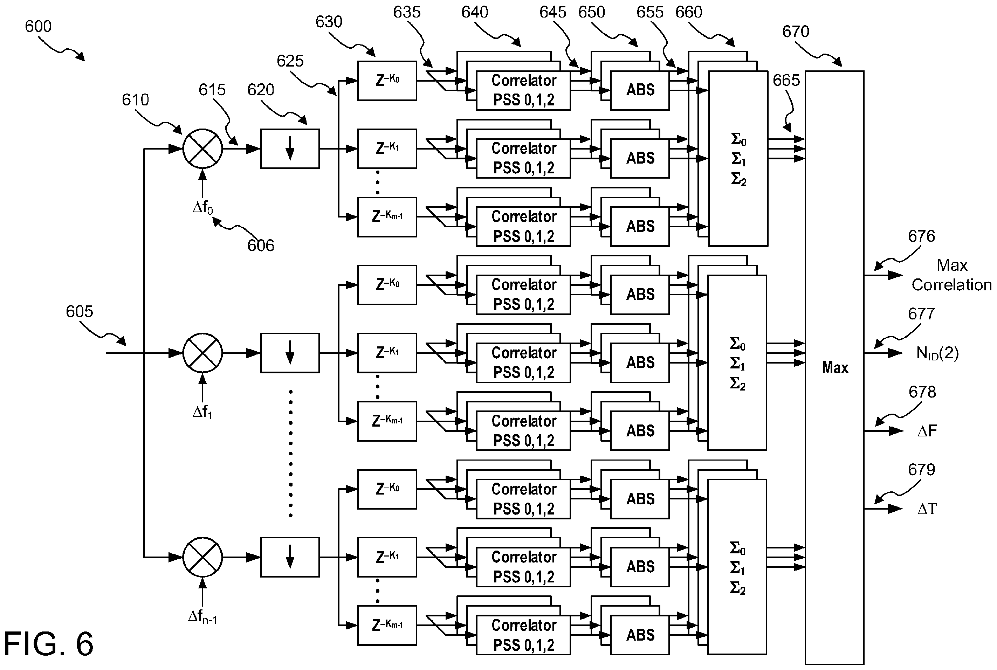

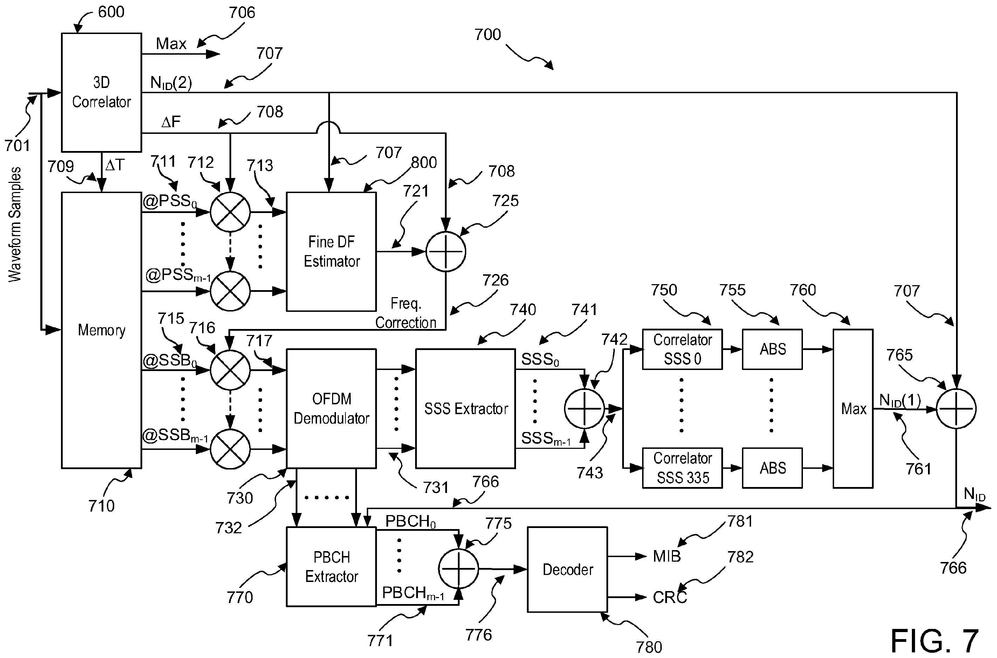

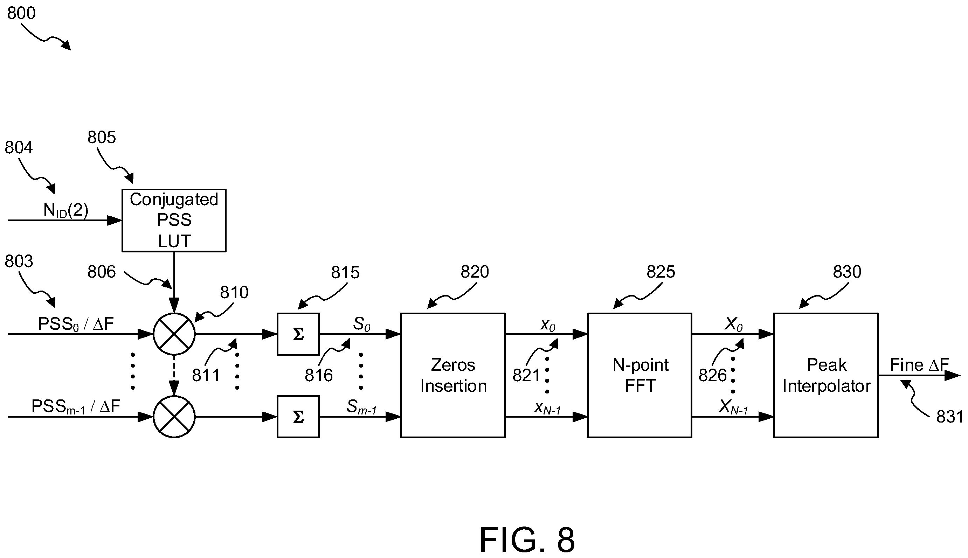

FIG. 7 shows a block diagram of a synchronization transmission acquisition module 700. The acquisition module 700 may comprise a memory 710 (e.g., for storing samples associated with a waveform), a three-dimension correlator 600 (e.g., as shown in FIG. 6), a set of (e.g., *m*) PSS vector multipliers 712, a set of (e.g., *m*) SSB vector multipliers 716, a fine frequency offset estimator 800 (e.g., as shown in FIG. 8), a frequency correction calculator 725, and an OFDM demodulator 730. The acquisition module 700 may further comprise a network identifier detector, comprising a secondary synchronization signal (SSS) extractor 740, a summation module 742, a multiplicity of correlators 750, means 755 and 760 to determine at least a first part of a network identifier (e.g., N_{ID}(1)) wherein the determining may be based on the correlation results that may correspond to the multiplicity of correlators 750, and a network ID constructor 765. The acquisition module 700 may further comprise a PBCH extractor 770, a summation module 775, and a decoder 780.

UT 210 may comprise an acquisition module 700, for example, to allow UT 210 to receive a synchronization transmission that may comprise multiple SSBs while overcoming any of a known or unknown frequency offset and/or VLSNR reception level. Acquisition module 700 may be implemented using, for example, any of electronic circuitry, one or more field programmable gate array (FPGA) devices, computer readable instructions, and/or any combination thereof, wherein computer readable instructions may be executed by any of a computer, one or more microprocessors, and/or one or more digital signal processors (DSPs), or any other applicable device or a combination of devices.

An acquisition module 700 may be configured to receive a digitally sampled waveform 701, wherein the digitally sampled waveform 701 may correspond to a frame or a part of a frame and wherein the frame or the part of a frame may contain a synchronization transmission, and wherein said frame may correspond to half of a 5G frame (e.g., five (5) 1 millisecond subframes). The synchronization transmission may be in accordance with 3GPP recommendations. The synchronization transmission may include multiple (e.g., *m*) SSB instances, for example, as shown in FIG. 3. The acquisition module 700 may be configured to determine whether a synchronization transmission may be present in the waveform 701, and, following a determination that a synchronization transmission is present in the waveform 701, demodulate the synchronization transmission, and decode information that may be included in the synchronization transmission in order to obtain at least a Master Information Block (MIB). As demodulation of the synchronization transmission might not be possible in the presence of a significant frequency offset, for example, the acquisition module 700 may be configured to determine the frequency offset (e.g., magnitude and sign) that may be associated with the waveform 701, correct the samples associated with the waveform 701 in accordance with the determined frequency offset, and then demodulate the synchronization transmission based on the frequency corrected samples.

An acquisition module 700 may be configured to store the digital samples 701 in memory 710 and, possibly in parallel, to insert the digital samples 701 into the three-dimension correlator 600. The correlator 600 may be configured to correlate the digitally sampled waveform 701, for example in parallel, with a predefined number of patterns corresponding to a PSS (for example with three (3) predefined PSS patterns). The correlator 600 may be further configured to perform said pattern correlations, for example in parallel, over a plurality of (e.g., *n*) frequency offsets and/or over multiple (e.g., *m*) timing offsets that may correspond to intervals between the multiple (*m*) SSB instances, respectively. The correlator 600 may be configured to output a maximum correlation value 706 (e.g., corresponding to the maximum correlation result 676 in FIG. 6). The maximum correlation value 706 may be used (e.g., by any of the acquisition module 700 and externally to the acquisition module 700) for determining whether a synchronization transmission may be present in the waveform 701, for example by comparing the maximum correlation value 706 with a threshold and determining that a synchronization transmission is present only if the maximum correlation value 706 may be any of equal to the threshold and exceeding the threshold. The correlator 600 may be further configured to output a second part of a network identifier (N_{ID}(2)) 707 (e.g., corresponding to the PSS pattern 677 in FIG. 6), a frequency offset (ΔF) 708 (e.g., corresponding to the frequency offset 678 in FIG. 6), and a timing offset (ΔT) 709 (e.g., corresponding to the timing offset 679 in FIG. 6). The timing offset 709 may correspond to a position of (a first sample of) the first PSS instance (also the first SSB instance, as SSB starts with PSS) within the digitally sampled waveform 701.

As previously described herein, a waveform 701 may exhibit a relatively large frequency shift (e.g., typically tens or hundreds of kHz). Conversely, a number of frequency shifts (e.g., *n*) that a correlator 600 may be configured to examine (e.g., simultaneously, at about in real-time) may be limited (e.g., few tens), for example, due to resources that may be required for realizing the correlator 600 being about linearly dependent on *n.* To detect PSS instances (e.g., that may be included in the digitally sampled waveform 701), even with a relatively large frequency shift (e.g., as in the example above), frequency offsets associated with (e.g., examined by) the correlator 600 may need to be at least tens of kHz apart. The difference in frequency between the frequency offset (ΔF) 708 and an actual frequency offset associated with the digitally sampled waveform 701 (e.g., a residual frequency offset), therefore, may still be significant (e.g., few kHz, possibly more than 10kHz).

An acquisition module 700 may be configured to use a timing offset (ΔT) 709 for at least the purpose of extracting, from memory 710, a set of multiple (*m*) vectors of samples 711 (e.g., @PSS₀ to @PSSₘ₋₁), wherein each vector of samples 711 may correspond to a PSS instance (e.g., a different PSS instance) of the multiple (*m*) PSS instances that may be included in waveform 701. The number of samples in each vector of samples 711 may correspond to the number of sub-carriers used for transmitting any of the PSS instances. Each vector of samples 711 may comprise at least 127 samples, for example, if a PSS is transmitted using 127 sub-carriers (e.g., as shown in FIG. 3, PSS 310).

An acquisition module 700 may be configured to eliminate at least a part of a phase run corresponding to a frequency offset associated with the digitally sampled waveform 701. The acquisition module 700 may be configured to, for each vector of samples 711, generate a corresponding frequency corrected vector of samples 713, for example by shifting a phase of each sample in the vector of samples 711 in accordance with the frequency offset (ΔF) 708. For example, the acquisition module 700 may be configured to multiply (e.g., using the PSS vector multipliers 712), at about simultaneously, each vector of samples 711 (e.g., of the *m* vectors of samples) by a vector of samples corresponding to the frequency offset (ΔF) 708 and to the position (e.g., in time) of the corresponding PSS instance (e.g., @PSSⱼ, 0 ≤ j ≤ m-1) within the digitally sampled waveform 701 (e.g., in accordance with the timing offset (ΔT) 709 and with the corresponding PSS instance timing offset *Kⱼ*). Yet, the multiple (e.g., *m*) frequency corrected vectors of samples 713 may still exhibit a residual phase run corresponding to the residual frequency offset.

An acquisition module 700 may be configured to use a fine frequency offset estimator 800 for determining, at least, a fine frequency offset 721 (e.g., Fine ΔF), wherein the fine frequency offset 721 may correspond to the residual frequency offset. The determining the fine frequency offset 721 may be based on the multiple (e.g., *m*) frequency corrected vectors of samples 713 and on the 2^{nd} part of the network ID 707 (e.g., N_{ID}(2), as determined by the correlator 600). Each frequency corrected vector of samples 713 may comprise (e.g., at least 127) samples corresponding to a PSS instance, wherein these samples may still exhibit phase errors due to the residual frequency offset. The estimator 800 may be configured to use the 2^{nd} part of the network ID for eliminating a BPSK modulation from the frequency corrected vectors of samples 713, process the BPSK-demodulated vectors into a series of samples in the time domain, and use a fast Fourier transform (FFT) and a peak interpolator for determining the fine frequency offset 721 (e.g., Fine ΔF). The acquisition module 700 may be configured to use the frequency correction calculator 725 for determining, at least, a frequency correction 726, that may correspond to the vectors of samples 711 (e.g., and therefore to the digitally sampled waveform 701 as well). Since the fine frequency offset 721 may be determined based on the frequency corrected vectors of samples 713, the frequency correction calculator 725 may be configured to determine the frequency correction 726 in accordance with the addition of the frequency offset (ΔF) 708 and the fine frequency offset 721. For example, the frequency correction 726 may be calculated in accordance with the formula -*(ΔF + Fine ΔF*).

An acquisition module 700 may be configured to use the timing offset (ΔT) 709 to extract a set of multiple (*m*) vectors of samples 715 (e.g., @SSB₀ to @SSBₘ₋₁) from the memory 710, for example, following frequency correction 726 determination. Each vector of samples 715 may correspond, for example, to a different SSB instance of the multiple (*m*) SSB instances included in waveform 701. The number of samples, in each vector of samples 715, may correspond to the number of sub-carriers used for transmitting any of the SSB instances. For example, if an SSB is transmitted using 240 sub-carriers (e.g., as shown in FIG. 3, SSB 305), then each vector of samples 715 may comprise at least 240 * 4 = 960 samples because each SSB may be transmitted over four (4) consecutive OFDM symbols and 240 sub-carriers.

An acquisition module 700 may be configured to eliminate about an entire phase run corresponding to a frequency offset associated with a digitally sampled waveform 701. The acquisition module 700 may be configured to generate, for each vector of samples 715, a corresponding frequency corrected vector of samples 717. The corresponding frequency corrected vector of samples 717 may be generated, for example, by shifting a phase of each sample in the vector of samples 715 in accordance with a frequency correction 726. For example, the acquisition module 700 may be configured to multiply, at about simultaneously (e.g., using the SSB vector multipliers 716), each vector of samples 715 (e.g., of the *m* vectors of samples) by a vector of samples corresponding to the frequency correction 726 and to the position (e.g., in time) of the corresponding SSB instance (e.g., @SSBⱼ, 0 ≤ j ≤ m-1) within the digitally sampled waveform 701 (e.g., in accordance with a timing offset (ΔT) 709 and with the corresponding SSB instance timing offset *Kⱼ*).

An acquisition module 700 may be configured to remove an OFDM modulation associated with SSB instances, for example, from waveforms associated with frequency corrected vectors of samples 717 following a generation of the multiple (e.g., *m*) frequency corrected vectors of samples 717 corresponding to the multiple (e.g., *m*) SSB instances. The OFDM demodulator 730 may be configured to demodulate (e.g., at about simultaneously) the multiple (e.g., *m*) waveforms, for example, to produce multiple (e.g., of *m*) blocks of demodulated symbols corresponding to the multiple SSB instances. The OFDM demodulator 730 may be configured to, for each vector of samples 717, produce a corresponding block of demodulated symbols by using FFT (e.g., wherein each symbol in a block of demodulated symbols may be represented by a complex number). The number of symbols in each block of demodulated symbols may correspond to the number of OFDM symbols in an SSB instance (e.g., 4) and to the number of OFDM sub-carriers associated with an SSB instance (e.g., 240). The acquisition module 700 may be configured to generate (e.g., within OFDM demodulator 730 or outside the OFDM demodulator 730) two copies of the multiple (e.g., *m*) blocks of demodulated symbols 731 and 732, and to couple one copy of the multiple blocks of demodulated symbols 731 to the SSS extractor 740, and another copy of the multiple blocks of demodulated symbols 732 to the PBCH extractor 770.

The SSS extractor 740 may be configured to receive the multiple (e.g., *m*) blocks of demodulated symbols 731 corresponding to the multiple (e.g., *m*) SSB instances (e.g., SSBⱼ, 0 ≤ j ≤ m-1). The SSS extractor 740 may be configured to extract, at about simultaneously, and from each block of demodulated symbols 731, a vector of SSS symbols 741 (e.g., SSSⱼ, 0 ≤ j ≤ m-1) corresponding to an SSS included in the corresponding SSB instance. If an SSS is transmitted using 127 sub-carriers (e.g., as shown in FIG. 3, SSS 315), for example, each vector of the multiple (e.g., *m*) vectors of SSS symbols 741 may include 127 symbols.

An acquisition module 700 may be configured to, following extraction of multiple (e.g., *m*) vectors of SSS symbols 741, determine a first part of the network identifier (N_{ID}(1)) in accordance with multiple SSS instances associated with the multiple vectors of SSS symbols 741. The different SSS instances may correspond to a same pattern (e.g., include a same first part of the network identifier), hence the acquisition module 700 may be configured to combine (e.g., using the summation module 742) the multiple (e.g., *m*) vectors of SSS symbols 741 to produce a combined vector of SSS symbols 743. As the acquisition module 700 may be configured to perform the combining 742 after about the entire phase run may be eliminated (e.g., before the OFDM demodulation 730), the combining 742 may be a coherent combining, which may result in processing gain. For example, if the synchronization transmission comprises four (4) SSB instances (e.g., as shown in FIG. 3), the combined vector of SSS symbols 743 may be associated with a signal to noise ratio (SNR) up to 6dB higher than the SNR associated with the vectors of SSS symbols (741). As the synchronization transmission may be received at VLSNR, the increase in SSS SNR may reduce the probability of misdetection later on.

An acquisition module 700 may be configured to correlate (e.g., in the frequency domain), for example, using a multiplicity of correlators 750, combined SSS vector of symbols 743, in parallel, and at about simultaneously, with multiplicity of patterns (e.g., a predefined multiplicity of patterns) corresponding to an SSS (e.g., predefined SSS patterns) to produce a multiplicity of correlation peaks (e.g., as complex numbers). The acquisition module 700 may be configured to perform said correlating, at about simultaneously, with 336 SSS patterns (e.g., predefined patterns). The acquisition module 700 may be configured to, based on the multiplicity of correlation results, generate 755 a corresponding multiplicity of normalized correlation peaks, and based on the multiplicity of normalized correlation peaks determine 760 a maximum correlation peak value. The acquisition module 700 may be configured to determine the SSS pattern corresponding to the determined maximum correlation peak value and determine the first part of the network identifier (N_{ID}(1)) 761 in accordance with the determined SSS pattern. The acquisition module 700 may be configured to calculate 765 a network identifier (e.g., N_{ID}) 766, for example, based on the first part of the network identifier 761 and the second part of the network identifier 707. The network identifier 766 may be calculated, for example, according to the formula *N_{ID}* = *3 * N_{ID}(1) + N_{ID}(2),* wherein N_{ID}(1) ∈ {0, 1, ..., 335} and N_{ID}(2) ∈ {0, 1, 2}.

A copy of multiple (e.g., *m*) blocks of demodulated symbols 732 produced by an OFDM demodulator 730 may be coupled to a PBCH extractor 770. The PBCH extractor 770 may be configured to receive the multiple (e.g., *m*) blocks of demodulated symbols 732 corresponding to the multiple (e.g., *m*) SSB instances (e.g., SSBⱼ, 0 ≤ j ≤ m-1). The PBCH extractor 770 may be configured to extract, at about simultaneously, and from each block of demodulated symbols 732, a vector of PBCH symbols 771 (e.g., PBCHⱼ, 0 ≤ j ≤ m-1) that may correspond to a PBCH included in the corresponding SSB instance. The extracting of PBCH symbols 771 may comprise at least a descrambling of the extracted symbols, for example, in accordance with the network identifier 766. As shown in FIG. 3, for example, PBCH information may be present in a 2^{nd} OFDM symbol 320, a 3^{rd} OFDM symbol 330 and 335, and a 4^{th} OFDM symbol 340, and each vector of the multiple (e.g., *m*) vectors of PBCH symbols 771 may include at least 576 symbols (e.g., 240 + 2 * 48 + 240).

PBCH information may vary between SSB instances. However, PBCH instances may be associated with a same information, for example, if the corresponding multiple SSB instances may be transmitted within a same frame. An acquisition module 700 may be configured to combine (e.g., using the summation module 775) multiple (e.g., *m*) vectors of PBCH symbols 771 to produce a combined vector of PBCH symbols 776. As the acquisition module 700 may be configured to perform the combining 775 after, about the entire phase run may be eliminated (e.g., before the OFDM demodulation 730), the combining 775 may be a coherent combining, which may result in processing gain. The combined vector of PBCH symbols 776 may be associated with a signal to noise ratio (SNR) up to 6dB higher than the SNR associated with the vectors of PBCH symbols 771, for example, if the synchronization transmission comprises four (4) SSB instances (e.g., as shown in FIG. 3). As the synchronization transmission may be received at VLSNR, the increase in PBCH SNR may increase the probability of successful decoding 780. The decoder 780 may be configured to decode the information associated with the combined vector of PBCH symbols 776 and produce a MIB 781 and a CRC 782.

FIG. 6 shows an example three-dimension correlator 600. The correlator 600 may comprise a plurality of (e.g., *n*) vector multipliers 610 coupled to an input of the correlator 600, and a corresponding plurality of decimators 620, coupled, respectively, to the plurality of vector multipliers 610. The correlator 600 may further comprise, per each decimator 620, and a corresponding vector multiplier 610, multiple (e.g., *m*) delay circuits 630 coupled to the decimator 620 (e.g., in parallel). The correlator 600 may further comprise, for each delay circuit 630, a predefined number of PSS correlators 640 coupled to the delay circuit 630 (e.g., in parallel), and a corresponding number of absolute value calculators 650 coupled, respectively, to the PSS correlators 640. The correlator 600 may further comprise a plurality (e.g., *n*) of sets of summation modules 660, wherein the number of summation modules in each set of summation modules corresponds to the predefined number of PSS correlators 640 that may be coupled to each delay circuit 630, and wherein each summation module may be coupled to multiple (e.g., *m*) absolute value calculators 650 that may be respectively coupled to multiple (e.g., *m*) PSS correlators 640 associated with a same PSS pattern and with a same vector multiplier 610. The correlator 600 may further comprise a correlation result generator 670 coupled to the plurality (e.g., *n*) of sets of summation modules 660, and may be further coupled to the outputs of the correlator 600. Correlator 600 may correspond to waveform 300 (e.g., as shown in FIG. 3), wherein the predefined number of PSS correlators 640 per delay circuit 630 may be set to 3, the number of delay circuits 630 per vector multiplier 610, *m,* may be set to 4, and the number of vector multipliers 610, *n*, may be determined, for example, in accordance with a sub-carrier spacing property of waveform 300.

A correlator 600 may be configured to receive a digitally sampled waveform 605. The digitally sampled waveform 605 may correspond to digitally sampled waveform 701 as described herein in FIG. 7. The correlator 600 may be configured to correlate the digitally sampled waveform 605, for example, with a predefined number of patterns corresponding to a PSS. The correlator 600 may correlate the digitally sampled waveform 605, for example, with three (3) predefined PSS patterns (e.g., PSS 0, PSS 1 and PSS 2), which may correspond to a second part of a network identifier (N_{ID}(2)). The correlator 600 may be further configured to perform said pattern correlations, for example, in parallel, over a plurality (e.g., *n*) frequency offsets (e.g., *Δf₀* to *Δfₙ₋₁*)*,* and/or over multiple timing offsets (e.g., *K₀* to *Kₘ₋₁*) that may correspond to intervals between multiple (*m*) SSB instances, respectively. The multiple timing offsets may be relative timing offsets, for example, *K₀* may be set to 0 and/or *K₁* through *Kₘ₋₁* may be set relative to the time of the first PSS instance, of the multiple PSS instances. As described herein in FIG. 6, the correlator 600 may comprise no memory, therefore all the required correlation combinations (e.g., of PSS patterns, frequency offsets, and timing offsets) may be performed, about simultaneously, for example, as samples associated with the digitally sampled waveform 605 may be streamed through correlator 600.

A correlator 600 may be configured to generate 610, about simultaneously, a plurality of (e.g., *n*) frequency shifted digitally sampled waveforms 615, for example, in accordance with a plurality of frequency offsets 606 (e.g., *Δf₀* to *Δfₙ₋₁*) that may be different, wherein the plurality of frequency offsets 606 may be predefined or set in accordance with a property of the waveform (e.g., according to a sub-carrier spacing property). For example, a j^{th} frequency shifted digitally sampled waveform 615 (e.g., *0 ≤ j ≤ n-1*) may be generated by shifting (e.g., using a vector multiplier 610) a phase of each sample in the digitally sampled waveform 605 in accordance with a j^{th} frequency offset 606 (e.g., *Δfⱼ*) and a time associated with each sample. As a PSS may occupy only part of the bandwidth associated with the digitally sampled waveform 605, and the correlator 600 may be configured to correlate only that part of the bandwidth, the correlator 600 may be configured to decimate (e.g., using a plurality of (e.g., *n*) decimators 620) the plurality of frequency shifted digitally sampled waveforms 615 (e.g., to generate a plurality (e.g., *n*) of decimated digitally sampled waveform 625). The correlator 600 may be further configured to generate, from each decimated digitally sampled waveform 625 and about simultaneously, multiple (e.g., *m*) frequency shifted and/or delayed digitally sampled waveforms 635, for example, by delaying (e.g., using multiple delay circuits 630) each decimated digitally sampled waveform 625 using multiple (different) timing offsets (e.g., *K₀* to *Kₘ₋₁*)*.* The multiple timing offsets may be predefined and/or set in accordance with at least one property of the waveform (e.g., a relative time between SSB instances). Correlator 600 may be configured to generate *n·m* frequency shifted and/or delayed digitally sampled waveforms 625, for example, where there may be *n* frequency offsets 606 (e.g., *Δf₀* to *Δfₙ₋₁*) and *m* PSS instances (e.g., at timing offsets *K₀* to *Kₘ₋₁*)*.*

A correlator 600 may be further configured to correlate each frequency shifted and/or delayed digitally sampled waveform 635, about simultaneously (e.g., by using a predefined number of PSS correlators 640) with the predefined PSS patterns (e.g., PSS 0, PSS 1 and PSS 2), to produce a predefined number of series of PSS correlation results 645 (e.g., as complex values). Each series of PSS correlation results 645 may correspond to a PSS pattern and/or to samples associated with the corresponding frequency shifted and/or delayed digitally sampled waveforms 635. The correlator 600 may be configured to calculate (e.g., using an absolute value calculator 650), for each series of PSS correlation results 645 and about simultaneously, an absolute value of each PSS correlation result associated with a series of PSS correlation results 645. The absolute value of each PSS correlation result may be calculated to produce corresponding series of absolute PSS correlation results 655. The correlator 600 may comprise *3·n·m* PSS correlators 640 and/or may be configured to generate *3·n·m* series of PSS correlation results 645 and *3·n·m* series of absolute PSS correlation results 655, for example, where there are *n* frequency offsets 606 (e.g., *Δf₀* to *Δfₙ₋₁*)*, m* PSS instances (e.g., at timing offsets *K₀* to *Kₘ₋₁*), and/or three (3) different PSS patterns (e.g., PSS 0, PSS 1 and PSS 2).

A correlator 600 may be configured to sum (e.g., using *n* sets of summation modules 660, e.g., Σ₀, Σ₁ and Σ₂ for each set) about simultaneously corresponding series of absolute PSS correlation results 655 for every combination of a PSS pattern (e.g., of the predefined PSS patterns) and a frequency offset of the plurality of frequency offsets 606 (e.g., *Δf₀* to *Δfₙ₋₁*)*,* for example, to generate for each combination of PSS pattern and frequency offset a pattern-frequency correlation results series 665. Each sum in a pattern-frequency correlation results series 665 may correspond to an about simultaneous correlation of the multiple PSS instances (e.g., *m* instances) at a specific time (e.g., a sample) from the beginning of the respective frequency shifted digitally sampled waveform 615. The correlator 600 may be configured to generate *3·n* pattern-frequency correlation results series 665, for example, where there may be three (3) different PSS patterns (e.g., PSS 0, PSS 1 and PSS 2) and *n* frequency offsets 606 (e.g., *Δf₀* to *Δfₙ₋₁*)*.*

A correlator 600 may be further configured to generate (e.g., using a correlation result generator 670) a maximum correlation result 676 corresponding to the multiplicity of pattern-frequency correlation results series 665. The correlator 600 may be configured to determine (e.g., using the correlation result generator 670), based on the specific pattern-frequency correlation results series 665 associated with the maximum correlation result 676, a PSS pattern 677 (e.g., corresponding to a second part of a network identifier (N_{ID}(2))) associated with the specific series 665. The correlator 600 may be configured to determine (e.g., using the correlation result generator 670) a frequency offset 678 (e.g., *ΔF*), for example, based on the specific pattern-frequency correlation results series 665 associated with the maximum correlation result 676. The correlator 600 may be configured to determine (e.g., using the correlation result generator 670) a timing offset (e.g., *ΔT*) 679 of a first PSS instance (e.g., of the multiple PSS instances) from the beginning of the digitally sampled waveform 605, for example, based on the specific series 665 and/or on the position of the maximum correlation result 676 within the specific series 665.

Functionality similar to that of correlator 600, except perhaps for the timing of correlation results, may be achieved, for example, by a correlator that comprises memory (e.g., for storing samples associated with a digitally sampled waveform) that may be configured to perform at least some of said correlations serially rather than simultaneously. Such an example does not depart from the scope of the disclosure.

FIG. 8 shows an example of a fine frequency offset estimator 800. An estimator 800 may comprise a conjugated PSS lookup table (LUT) 805, a set of multiple (e.g., *m*) vector multipliers 810, a set of multiple (e.g., *m*) pre-summation modules 815, a zeros insertion module 820, an FFT module 825, and a peak interpolator 830. The estimator 800 may be configured to receive multiple (e.g., *m*) vectors of samples (e.g., complex samples) in the time domain (e.g., *PSS₀* / *ΔF* to *PSSₘ₋₁* / *ΔF*) 803. The multiple (e.g., *m*) vectors of samples 803 may correspond to multiple (e.g., *m*) PSS instances (e.g., *PSS₀* to *PSSₘ₋₁*) and/or may further correspond to a (relatively small) frequency offset (e.g., Fine ΔF). A PSS may be transmitted using 127 sub-carriers (FIG. 3, PSS 310) as described herein in FIG. 3, for example, hence each vector of samples 803 may comprise at least 127 samples.

An estimator 800 may be configured to receive an identifier 804, wherein the identifier 804 may correspond to a second part of a network identifier (e.g., N_{ID}(2)), which in turn corresponds to a PSS pattern of a (predefined) set of PSS patterns. The estimator 800 may be configured to, for each PSS pattern of the set of PSS patterns, store in the LUT 805 at least a conjugated vector of samples (e.g., in the time domain) corresponding to the PSS pattern, wherein the conjugated vectors of samples may be of the same length as the vectors of samples 803 (e.g., at least 127 samples). The estimator 800 may be configured to produce a conjugate vector of samples 806 that may correspond to the PSS pattern associated with multiple (e.g., *m*) vectors of samples 803, for example, based on the identifier 804 and the LUT 805.

An estimator 800 may be configured to multiply 810 (e.g., using multiple (e.g., *m*) vector multipliers) each vector of samples 803 (e.g., *PSS₀* / *ΔF* to *PSSₘ₋₁* / *ΔF*) by the conjugate vector of samples 806. The multiple (e.g., *m*) PSS instances (e.g., *PSS₀* to *PSSₘ₋₁*) may be BPSK modulated. The multiplications 810, by the conjugate vector of samples 806, may produce multiple (e.g., *m*) vectors 811 (e.g., of samples in the time domain) that may correspond to the multiple vectors of samples 803 (e.g., *PSS₀* / *ΔF* to *PSSₘ₋₁* / *ΔF*). The multiple vectors 811 may not include BPSK modulation information. Since the multiple vectors of samples 803 may correspond to a frequency offset (e.g., Fine ΔF) and the removal of the BPSK modulation may not remove the phase shift associated with the frequency offset, the phase information included in the multiple vectors 811 (e.g., of unmodulated samples) may be associated with the frequency offset (e.g., Fine ΔF).

An estimator 800 may be configured to perform (e.g., in parallel) pre-summation 815 on each of the multiple (e.g., *m*) vectors of unmodulated samples 811 to produce corresponding multiple (complex) summed samples 816 (e.g., *S₀* to *Sₘ₋₁*)*.* The multiple presummations 815 may be used for at least the purpose of significantly reducing the size of an FFT(e.g., FFT 825 as described herein). Each vector of unmodulated samples 811 may comprise at least *N_{S}* samples that may correspond to a sampling rate *f_{S},* hence each vector of unmodulated samples 811 may be associated with a sampling duration *D_{S},* wherein *D_{S} ≈ N_{S}* / *f_{S}.* Due to the frequency offset (e.g., Fine ΔF), a phase associated with the vector of unmodulated samples 811 may shift during the sampling duration *D_{S}.* The sampling duration *D_{S}* may be sufficiently smaller than a cycle period associated with the frequency offset (e.g., the expression *Dₛ << 1*/*Fine ΔF* may be true), for example, if the sampling rate divided by the number of samples (e.g., *f_{S}* / *N_{S}*) is sufficiently greater than the frequency offset (e.g., if the expression *f_{S}* / *N_{S} >> Fine ΔF* is true). The phase shift during the sampling duration (*D_{S}*) may be sufficiently small for the pre-summation 815 to be considered coherent, for example, if the sampling duration (*D_{S}*) is sufficiently smaller than the cycle period associated with the frequency offset (*1*/*Fine ΔF*). As the pre-summation 815 may be a coherent summation, the summed samples 816 may be associated with a processing gain corresponding to the number of samples (*N_{S}*) in the vectors of unmodulated samples 811.

Respective intervals associated with multiple summed samples 816 may correspond to respective intervals associated with multiple PSS instances, for example, as the multiple summed samples 816 (e.g., *S₀* to *Sₘ₋₁*) may be derived from multiple vectors of samples 803 (e.g., *PSS₀* / *ΔF* to *PSSₘ₋₁* / *ΔF*) that may correspond to the multiple PSS instances (e.g., *PSS₀* to *PSSₘ₋₁*)*.* The minimum interval between successive PSS instances may be the duration of an SSB, as described herein in FIG. 3. It may be noted that an SSB comprising four (4) OFDM symbols over an OFDM carrier associated with sub-carrier spacing of*f_{SCS}* may have a duration of *4*/*f_{SCS}.* An estimator 800, accordingly, may be configured to transform a vector containing the, possibly, unevenly spaced (e.g., in the time domain) multiple summed samples 816 (e.g., *S₀* to *Sₘ₋₁*) into a vector (e.g., a larger vector) of evenly spaced FFT input samples 821 (e.g., *x₀* to *x_{N-1}, N≥M*)*.* The interval between consecutive FFT input samples 821 may correspond to the duration of an SSB (e.g., *4*/*f_{SCS}*)*,* and the number of FFT input samples in vector 821 may be a power of 2 (e.g., *N = 2ⁿ, n* is a natural number). The estimator 800 may be configured to transform the vector containing the multiple summed samples 816 into the vector containing FFT input samples 821, for example, by inserting 820 one or more samples of zero value between any two consecutive summed samples 816 that may correspond to an interval different than a duration of an SSB and/or by inserting samples of zero value after the last summed sample 816 as necessary (e.g., according to the length of the vector of FFT input samples 821).

An estimator 800 may be configured to perform a Fast Fourier Transform (FFT) 825 on a vector of FFT input samples 821, wherein the FFT size may correspond to a length of the vector of FFT input samples 821 (e.g., N-point FFT). The estimator 800 may be configured to produce, from the FFT 825, a vector of spectral samples 826 (e.g., in the frequency domain) (e.g., *X₀* to *X_{N-1}*)*,* wherein the frequency resolution associated with the spectral samples 826 may correspond to the inverse of the interval between consecutive FFT input samples 821 and to the FFT size. A frequency resolution associated with the spectral samples 826 may be about (*1*/*(4*/*f_{SCS}))*/*32* = *f_{SCS}*/*128,* for example, if the interval between consecutive FFT input samples is about *4*/*f_{SCS}* and the FFT size is 32. The frequency resolution of the spectral samples 826 may be slightly smaller than 1kHz, for example, if the sub-carrier spacing associated with SSB transmission is 120kHz.

A vector of spectral samples 826 may correspond to a frequency offset (e.g., Fine ΔF) that may be included in multiple vectors of unmodulated samples 811 (e.g., corresponding to the frequency offset (e.g., Fine ΔF)) that may be associated with the vectors of samples 803 (e.g., *PSS₀* / *ΔF* to *PSSₘ₋₁* / *ΔF*), for example, since phase information included in multiple vectors of unmodulated samples 811 may be associated with the frequency offset (e.g., Fine ΔF) and may also be included in the vector of summed samples 816 and/or in the vector of FFT input samples 821 (e.g., adding zero samples does not affect any phase information). However, since the frequency offset (e.g., Fine ΔF) may not be a multiplication of a frequency resolution that may be associated with the spectral samples 826, and since demodulation (e.g., as described herein in FIG. 7, 730) may require a residual frequency offset smaller than the frequency resolution, an estimator 800 may be configured to determine the frequency offset 831 (e.g., Fine ΔF), for example, by performing peak interpolation 830 on the spectral samples 826. Peak interpolation 830 may comprise determining a first spectral sample associated with the highest amplitude, determining the two spectral samples adjacent to the first spectral sample (e.g., one on each side), computing a parabolic curve in accordance with the first spectral sample and the two adjacent spectral samples, and determining the peak in accordance with the peak of the parabolic curve.

Various aspects of the disclosure may be embodied as one or more methods, systems, apparatuses (e.g., components of a satellite communication network), and/or computer program products. Accordingly, those aspects may take the form of an entirely hardware embodiment, an entirely software embodiment, an entirely firmware embodiment, or an embodiment combining firmware, software, and/or hardware aspects. Furthermore, such aspects may take the form of a computer program product stored by one or more computer-readable storage media having computer-readable program code, or instructions, embodied in or on the storage media. Any suitable computer readable storage media may be utilized, including hard disks, CD-ROMs, optical storage devices, magnetic storage devices, and/or any combination thereof. One or more computer readable media storing instructions may be used. The instructions, when executed, may cause one or more apparatuses to perform one or more acts described herein. The one or more computer readable media may comprise transitory and/or non-transitory media. In addition, various signals representing data or events as described herein may be transferred between a source and a destination in the form of electromagnetic waves traveling through signal-conducting media such as metal wires, optical fibers, and/or wireless transmission media (e.g., air and/or space).

Modifications may be made to the various examples described herein. For example, each of the elements of the aforementioned examples may be utilized alone, in combination, or in sub-combination with elements of the other examples. It will also be appreciated and understood that modifications may be made without departing from the true spirit and scope of the present disclosure. The description is thus to be regarded as illustrative instead of restrictive on the present disclosure.

Following are a list of clauses highlighting various aspects of the disclosure.

Clause 1. A method, comprising:
receiving, by a user terminal (UT), a transmission comprising one or more synchronization signals;
detecting a first synchronization signal of the one or more synchronization signals;
determining, based on the first synchronization signal, a frequency offset value and a time offset value, wherein the frequency offset value and the time offset value correspond to the transmission; and
generating, based on the frequency offset value and the time offset value, a frequency corrected first synchronization signal.

Clause 2. The method of clause 1, further comprising determining, based on the first synchronization signal, a part of a network identifier, wherein the first synchronization signal is formatted according to one of a plurality of predefined patterns of a set of patterns; and wherein the determining the part of the network identifier is based on the set of patterns.

Clause 3. The method of any one of clauses 1-2, wherein the transmission is received at an unknown time offset from a start of a frame.

Clause 4. The method of any one of clauses 1-3, wherein the transmission is received with an unknown frequency offset.

Clause 5. The method of any one of clauses 1-4, wherein the determining further comprises determining a detection quality indicator.

Clause 6. The method of clause 2, further comprising:
determining, based on the part of the network identifier and the frequency corrected first synchronization signal, a fine frequency offset value;
calculating, based on the frequency offset value and the fine frequency offset value, a frequency correction value; and
generating, based on the frequency correction value, a frequency corrected transmission.

Clause 7. The method of clause 6, wherein the determining the fine frequency offset value comprises:
generating, based on the frequency offset, a frequency corrected first synchronization signal; and
determining, based on the frequency corrected first synchronization signal and the part of the network identifier, the fine frequency offset value.

Clause 8. The method of any one of clauses 6-7, further comprising:
demodulating the frequency corrected transmission, to produce a demodulated transmission; and
extracting, from the demodulated transmission, a second synchronization signal of the one or more synchronization signals.

Clause 9. The method of clause 8, further comprising:
correlating, with a plurality of predefined patterns associated with a second set of patterns, the second synchronization signal; and
determining, based on the correlating and the second set of patterns, a remaining part of the network identifier.

Clause 10. The method of any one of clauses 8-9, wherein the transmission further comprises one or more instances of a third synchronization signal of the one or more synchronization signals; and further comprising:
extracting, from the demodulated transmission, the one or more instances of the third synchronization signal of the one or more synchronization signals;
combining the one or more instances of the third synchronization signal to produce a combined third synchronization signal;
generating, by decoding the combined third synchronization signal, a decoded third synchronization signal; and
determining, from the decoded third synchronization signal, one or more of an information block, an error detection word, or an error correction word.

Clause 11. A method, comprising:
receiving, by a user terminal (UT), a transmission comprising one or more synchronization signals;
determining, based on a first synchronization signal, a frequency offset value, a time offset value and a part of a network identifier;
generating, based on the frequency offset value, the time offset value and the part of a network identifier, a frequency corrected transmission;
producing, by demodulating the frequency corrected transmission, a second synchronization signal; and
determining, based on the second synchronization signal, a remaining part of the network identifier.

Clause 12. The method of clause 11, wherein the first synchronization signal is formatted according to one of a plurality of predefined patterns of a set of patterns; and
wherein the determining the part of the network identifier is based on the set of patterns.

Clause 13. The method of any one of clauses 11-12, wherein the determining of the remaining part of the network identifier comprises:
correlating the second synchronization signal with a plurality of predefined patterns of a second set of patterns; and
determining, based on the correlating, the remaining part of the network identifier.

Clause 14. The method of any one of clauses 11-13, further comprising:
generating, based on the part of the network identifier and the remaining part of the network identifier, the network identifier.

Clause 15. The method of clause 14, further comprising:
determining, based on the network identifier, one or more instances of a third synchronization signal of the one or more synchronization signals.

Clause 16. The method of clause 15, further comprising:
generating, by combining the one or more instances of the third synchronization signal, a combined third synchronization signal.

Clause 17. The method of clause 16, further comprising:
determining, by decoding the combined third synchronization signal, one or more of an information block, an error detection word, or an error correction work.

Clause 18. The method of any one of clauses 11-17, wherein the generating the frequency corrected transmission comprises:
generating, based on the frequency offset and the time offset, a frequency corrected first synchronization signal;
determining, based on the part of the network identifier and the frequency corrected first synchronization signal, a fine frequency offset value;
calculating, based on the frequency offset value and the fine frequency offset value, a frequency correction value; and
generating, based on the frequency correction value, the frequency corrected transmission.

Clause 19. A method, comprising:
receiving, by a user terminal (UT), a transmission comprising a plurality of synchronization signaling blocks (SSB) comprising one or more primary synchronization signal (PSS) instances;
detecting the one or more PSS instances;
performing a three-dimensional correlation over one or more stored transmission samples;
determining a correlation peak associated with the one or more stored transmission samples; and
determining, based on the correlation peak, one or more of a part of a network identifier, a frequency offset value, or a time offset value.

Clause 20. The method of clause 19, wherein the transmission is received at an unknown time offset from a start of a frame.

Clause 21. The method of any one of clauses 19-20, wherein the frame corresponds to half of a 5G frame.

Clause 22. The method of any one of clauses 19-21, further comprising:
determining, based on the part of the network identifier a fine frequency offset value;
calculating, based on the frequency offset value and the fine frequency offset value, a frequency correction; and
generating, by applying the frequency correction to the one or more stored transmission samples, a frequency corrected transmission.

Clause 23. The method of clause 22, wherein calculating the frequency correction comprises adding the frequency offset value and the fine frequency offset value

Clause 24. The method of any one of clauses 19-23, wherein dimensions of the three-dimensional correlation comprise a time dimension, a frequency dimension, and a PSS pattern dimension.

Clause 25. The method of any one of clauses 19-24, wherein the part of the network identifier corresponds to each of the one or more PSS instances.

Clause 26. The method of any one of clauses 19-25, wherein the frequency offset value corresponds to each of the one or more PSS instances.

Clause 27. The method of any one of clauses 19-26, wherein the time offset value corresponds to a first PSS instance of the one or more PSS instances.

Clause 28. A method, comprising:
receiving, by a user terminal (UT), a transmission comprising a plurality of synchronization signals;
detecting a first synchronization signal of the plurality of synchronization signals;
determining, based on the first synchronization signal, a frequency offset value and a second part of a network identifier;
determining, based on the second part of a network identifier and the frequency offset value, a fine frequency offset value;
calculating, based on the fine frequency offset value and the frequency offset value, a frequency correction value;
generating, by applying the frequency correction value to the transmission, a frequency corrected transmission;
determining, by demodulating the frequency corrected transmission, a second synchronization signal from the plurality of synchronization signals;
correlating, with a second set of predefined patterns, the second synchronization signal;
determining, based on the second set of patterns and the correlating, a first part of the network identifier;
generating, based on the first part of the network identifier and the second part of the network identifier, a network identifier;
determining, based on the network identifier, a third synchronization signal; and
extracting, from the third synchronization signal, one or more of an information block, an error detection word, or an error correction word.

Clause 29. The method of clause 28, wherein the first synchronization signal of the plurality of synchronization signals is formatted according to a first set of predefined patterns.

Clause 30. The method of any one of clauses 28-29, wherein the transmission is received with an unknown time offset.

Clause 31. The method of any one of clauses 28-30, wherein the transmission is received with an unknown frequency offset.

Clause 32. The method of any one of clauses 28-31, wherein the determining the fine frequency offset value comprises:
generating, based on the frequency offset, a frequency corrected first synchronization signal; and
determining, based on the frequency corrected first synchronization signal and the second part of the network identifier, the fine frequency offset value.

Clause 33. A method, comprising:
receiving, by a user terminal (UT), a transmission comprising a plurality of synchronization signaling blocks (SSB) comprising one or more primary synchronization signal (PSS) instances;
detecting the one or more PSS instances;
performing a three-dimensional correlation over one or more stored transmission samples;
determining a correlation peak associated with the one or more stored transmission samples;
determining, based on the correlation peak, one or more of a part of a network identifier, a frequency offset value, or a time offset value;
generating, based on the part of the network identifier and the frequency offset value, a frequency corrected transmission;
demodulating, to remove an orthogonal frequency division multiplexing (OFDM) modulation associated with the transmission, the frequency corrected transmission to produce a demodulated transmission; and
extracting, from the demodulated transmission, symbols associated with a plurality of secondary synchronization signal (SSS) instances.

Clause 34. The method of clause 33, further comprising:
generating, by combining symbols associated with the plurality of SSS instances, a processing gain for the SSS.

Clause 35. The method of any one of clauses 33-34, wherein the generating the frequency corrected transmission comprises:
generating, based on the frequency offset and the timing offset, a frequency corrected first synchronization signal;
determining, based on the part of the network identifier and the frequency corrected first synchronization signal, a fine frequency offset value;
calculating, based on the frequency offset value and the fine frequency offset value, a frequency correction value; and
generating, based on the frequency correction value, the frequency corrected transmission.

Clause 36. A method, comprising:
receiving, by a user terminal (UT), a transmission comprising a plurality of synchronization signaling blocks (SSB) comprising one or more primary synchronization signal (PSS) instances;
detecting the one or more PSS instances;
performing a three-dimensional correlation over one or more stored transmission samples;
determining a correlation peak associated with the one or more stored transmission samples;
determining, based on the correlation peak, one or more of a second part of a network identifier, a frequency offset value, or a time offset value;
generating, based on the second part of the network identifier and the frequency offset value, a frequency corrected transmission;
demodulating, to remove an orthogonal frequency division multiplexing (OFDM) modulation associated with the transmission, the frequency corrected transmission, to produce a demodulated transmission;
extracting, from the demodulated transmission, symbols associated with a plurality of secondary synchronization signal (SSS) instances;
correlating a combined SSS with a set of predefined SSS patterns;
determining, based on the correlating the combined SSS, a first part of the network identifier;
calculating, based on the first part of the network identifier and the second part of the network identifier, a network identifier; and
using the network identifier to at least extract symbols associated with one or more physical broadcast channel (PBCH) instances.

Clause 37. The method of clause 36, wherein the extracting symbols comprises descrambling, in accordance with the network identifier, one or more of the one or more PBCH instances.

Clause 38. The method of any one of clauses 36-36, wherein the one or more PBCH instances comprise a same sequence of symbols; and further comprising:
generating a processing gain using the one or more PBCH instances.

Clause 39. The method of any one of clauses 36-38, wherein the generating the processing gain comprises coherently combining symbols associated with the one or more PBCH instances into symbols associated with a combined PBCH.

Clause 40. The method of any one of clauses 36-39, further comprising:
decoding the combined PBCH; and
extracting at least a master information block and a cyclic redundancy check (CRC) that are included in the PBCH.

## Claims

1. A method, comprising:
receiving, by a user terminal (UT), a transmission comprising one or more synchronization signals;
detecting a first synchronization signal of the one or more synchronization signals;
determining, based on the first synchronization signal, a frequency offset value and a time offset value, wherein the frequency offset value and the time offset value correspond to the transmission; and
generating, based on the frequency offset value and the time offset value, a frequency corrected first synchronization signal.

2. The method of claim 1, further comprising determining, based on the first synchronization signal, a part of a network identifier, wherein the first synchronization signal is formatted according to one of a plurality of predefined patterns of a set of patterns; and
wherein the determining the part of the network identifier is based on the set of patterns.

3. The method of any one of claims 1-2, wherein the transmission is received at an unknown time offset from a start of a frame.

4. The method of any one of claims 1-3, wherein the transmission is received with an unknown frequency offset.

5. The method of claim 2, further comprising:
determining, based on the part of the network identifier and the frequency corrected first synchronization signal, a fine frequency offset value;
calculating, based on the frequency offset value and the fine frequency offset value, a frequency correction value; and
generating, based on the frequency correction value, a frequency corrected transmission.

6. The method of claim 5, wherein the determining the fine frequency offset value comprises:
generating, based on the frequency offset, a frequency corrected first synchronization signal; and
determining, based on the frequency corrected first synchronization signal and the part of the network identifier, the fine frequency offset value.

7. The method of any one of claims 5-6, further comprising:
demodulating the frequency corrected transmission, to produce a demodulated transmission; and
extracting, from the demodulated transmission, a second synchronization signal of the one or more synchronization signals.

8. The method of claim 7, further comprising:
correlating, with a plurality of predefined patterns associated with a second set of patterns, the second synchronization signal; and
determining, based on the correlating and the second set of patterns, a remaining part of the network identifier.

9. The method of any one of claims 7-8, wherein the transmission further comprises one or more instances of a third synchronization signal of the one or more synchronization signals; and further comprising:
extracting, from the demodulated transmission, the one or more instances of the third synchronization signal of the one or more synchronization signals;
combining the one or more instances of the third synchronization signal to produce a combined third synchronization signal;
generating, by decoding the combined third synchronization signal, a decoded third synchronization signal; and
determining, from the decoded third synchronization signal, one or more of an information block, an error detection word, or an error correction word.

10. A method, comprising:
receiving, by a user terminal (UT), a transmission comprising one or more synchronization signals;
determining, based on a first synchronization signal, a frequency offset value, a time offset value and a part of a network identifier;
generating, based on the frequency offset value, the time offset value and the part of a network identifier, a frequency corrected transmission;
producing, by demodulating the frequency corrected transmission, a second synchronization signal; and
determining, based on the second synchronization signal, a remaining part of the network identifier.

11. The method of claim 10, wherein the first synchronization signal is formatted according to one of a plurality of predefined patterns of a set of patterns; and
wherein the determining the part of the network identifier is based on the set of patterns.

12. The method of any one of claims 10-11, wherein the determining of the remaining part of the network comprises:
correlating the second synchronization signal with a plurality of predefined patterns of a second set of patterns; and
determining, based on the correlating, the remaining part of the network identifier.

13. The method of any one of claims 10-12, wherein the generating the frequency corrected transmission comprises:
generating, based on the frequency offset and the time offset, a frequency corrected first synchronization signal;
determining, based on the part of the network identifier and the frequency corrected first synchronization signal, a fine frequency offset value;
calculating, based on the frequency offset value and the fine frequency offset value, a frequency correction value; and
generating, based on the frequency correction value, the frequency corrected transmission.

14. A method, comprising:
receiving, by a user terminal (UT), a transmission comprising a plurality of synchronization signaling blocks (SSB) comprising one or more primary synchronization signal (PSS) instances;
detecting the one or more PSS instances;
performing a three-dimensional correlation over one or more stored transmission samples;
determining a correlation peak associated with the one or more stored transmission samples; and
determining, based on the correlation peak, one or more of a part of a network identifier, a frequency offset value, or a time offset value.

15. The method of claim 14, wherein the transmission is received at an unknown time offset from a start of a frame, and wherein the frame corresponds to half of a 5G frame.

16. The method of any one of claims 14-15, further comprising:
determining, based on the part of the network identifier a fine frequency offset value;
calculating, based on the frequency offset value and the fine frequency offset value, a frequency correction; and
generating, by applying the frequency correction to the one or more stored transmission samples, a frequency corrected transmission.
